(19) Europäisches Patentamt / European Patent Office / Office européen des brevets

(11) **EP 4 576 001 A1**

(12) **EUROPEAN PATENT APPLICATION**

(43) Date of publication:
**25.06.2025 Bulletin 2025/26**

(21) Application number: **23307316.2**

(22) Date of filing: **21.12.2023**

(51) International Patent Classification (IPC):
**G06T 15/20** (2011.01)    **G06T 17/00** (2006.01)

(52) Cooperative Patent Classification (CPC):
**G06T 17/00; G06T 15/08; G06T 15/20; G06T 19/00;**
G06T 2210/36; G06T 2210/56

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Tyndall FX**
**06210 Mandelieu-La-Napoule (FR)**

(72) Inventors:
- **BELEMKOABGA, Stéphane**
  **94210 Saint-Maur-des-Fossés (FR)**
- **HUDON, Matis**
  **94220 Charenton (FR)**
- **ALAIN, Martin**
  **Rathdrum, A67YA48 (IE)**

(74) Representative: **Novagraaf Technologies**
**Bâtiment O2**
**2, rue Sarah Bernhardt**
**CS90017**
**92665 Asnières-sur-Seine Cedex (FR)**

(54) **METHOD AND APPARATUS FOR PREDICTING CHARACTERISTICS REPRESENTATIVE OF A SCENE**

(57)    Method and apparatus are proposed comprising:
- obtaining (51) multidimensional coordinates of a plurality of points of a scene included in a virtual space (VS),
- processing (52) said plurality of points by a trained machine learning model, comprising a neural network (DEC), said processing comprising, for the multidimensional coordinates of one point of said plurality of points:
- obtaining (521) a vector of features, comprising features learnt during training and stored in association with a cell of at least one striding grid of a set of K striding grids, with K being an integer greater than or equal to 2, a given striding grid ($G_k$) being associated with one resolution level k, with k integer within 1 and K, said given resolution level k subdividing the virtual space (VS) into a number $S_k$ of subspaces, the given striding grid ($G_k$) being applied to further subdivide the subspace of said $S_k$ subspaces mapping said multidimensional coordinates, at least one of said learnt features of said vector being obtained from the cell of said striding grid mapping said multidimensional coordinates within said subspace,
- applying (522) said vector of features as input to the neural network, to produce scene characteristics as output.

OBT. INP — 50

OBT. MC — 51

OBT. Vf — 521

OBT. SC — 522

52

GEN. RR — 53

**FIG. 5A**

EP 4 576 001 A1

## Description

## Technical Field

The invention relates to the technical field of predicting characteristics representative of a scene using a trained machine learning model.

It applies, for instance, but not only, to generation of novel views or videos of a scene based on said prediction.

## Background

Neural Radiance fields (NERFs) are methods for 3-Dimensional (3-D) scenes novel views synthesis. From a small set of pictures captured in a scene, a neural network is trained to learn an underlying function, namely a neural graphics primitive task, which is then used to generate new pictures/videos of the same scene from different virtual camera views. More generally, this technology offers an array of applications like video content creation, mobile photography etc.

NERFs are based on 3D rendering technology called Volume Rendering. The method unfolds as follows:

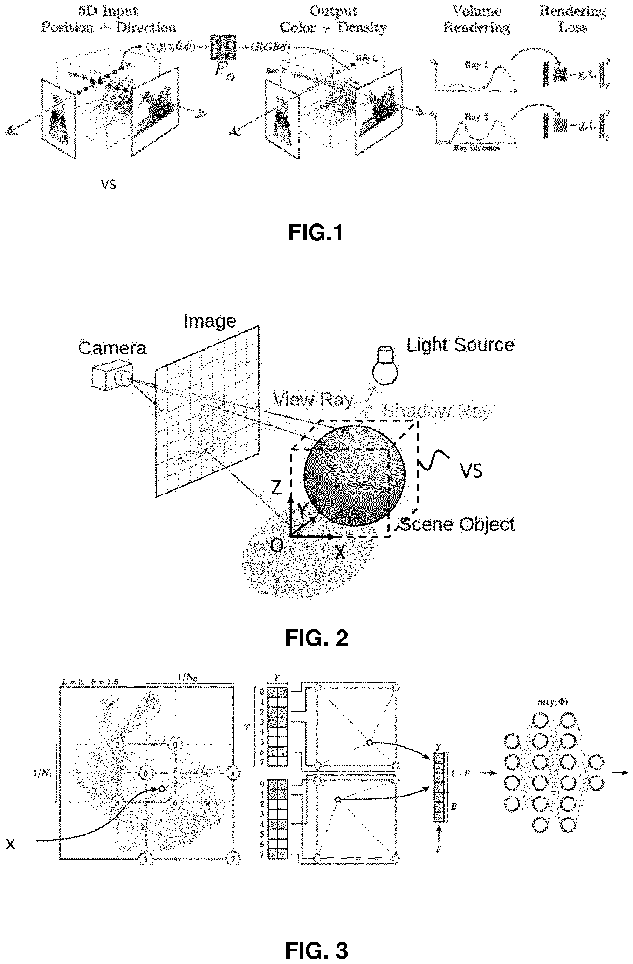

In a first step, for a given 3-D scene to be reconstructed, a 3-D virtual space, namely a virtual bounding box including the 3-D scene is represented. The goal is to learn to predict for each point $(x, y, z)$ of this 3-D virtual space an opacity value and a directional color, as illustrated in FIG. 1.

In a second step, a function representing the NERF is initialized and trained; for predicting the opacity and color for each position in the 3D bounding box. Two main parts compose that function:

- A positional encoder: that maps (x,y,z) positions into high dimension vectors.
- A decoder, for example a Fully Connected Neural Network (FCN) or a Multi-Layer Perceptron (MLP)) which takes as input the encoded vector and predicts the corresponding opacity and color.

Encoding the positions (x,y,z) into high dimension vectors before feeding them to the MLP also ensures that the latter learns high frequency details.

In a third step, a volume rendering technique is used to project/render the virtual scene into 2-D images that should match the training set images. More specifically, for a given camera view, rays are projected from the camera into the virtual scene. Along each ray, colors and opacities are computed at different positions using the NERF Function. The predictions are then aggregated through volume rendering for each ray to predict the final color of the corresponding pixel, as illustrated in FIG. 2.

In a fourth step, a loss function is computed between the predicted images and the training set ground truth images. This loss function is backpropagated through the entire pipeline and the NERF function is trained iteratively.

The positional encoder is a non-trainable function, whereas the MLP is.

However, the original NERF method has a certain number of issues that make it impractical to use:

- The input $(x, y, z, \theta, \phi)$ (positions in space and origins + directions of the camera rays) are manually encoded into high dimensional vectors using a non-trainable method called positional encoding: these vectors are still not sufficiently separable from one input to its neighbors; The method thus struggles with High-Fidelity reconstruction (the colors are smoothed over highly detailed regions).
- It relies on a large MLP that is requested several hundreds of times to render one pixel.
- Architecture is incompatible with classic computer graphic acceleration because of the large MLP which operations cannot take advantage of GPU hardware acceleration in classical rendering frameworks.

The original nerf method is costly to train and evaluate (from 8h to 24h).

In US2023/0052645A1, a technique, called "instant NGP" is disclosed in which input positions in 3D space are mapped into quantized positions in a set of multiresolution grids which are then transformed into set of indices in a plurality of features using multiresolution hash encoding, as illustrated by FIG. 3.

Finally, the features retrieved from each list are concatenated to form a vector of features, which is further fed into the NERF decoder. As the number k of features of each list is much less than dimension $n_i$ of most of the grids of the set of multiresolution grids, memory complexity is reduced and a small Fully Connected Network can be used as a decoder, which is far less costly to train and evaluate.

However, the result of querying features from hash tables is that they are pseudo randomly distributed over the space. Therefore, position in 3D space have no a priori known to the hash tables and there is no possibility to know a priori which features are going to be queried for a given position in space. Spatial information relative to the input positions in 3D space is lost and a consequence is that it does not allow to control over a feature repetition pattern.

A disadvantage of this technique is that due to $k \ll n_i$ for most of the grids, there are some collisions, that is multiple different positions will be indexed to the same feature in the list. Although the risk of collisions is reduced by concatenating all the features, for each position, into a new vector of features, collisions occur pseudo-randomly, due to use of a hash function and it is not possible to know where a feature of one of the grids is repeated through the 3D space and at which frequency. The FCN may happen to be unable to compensate for these collisions, which produces salient artifacts on reconstructed pictures of the 3D scene.

Another drawback is that, as features are organized randomly from one subspace to another, this method is not suited to specialize on specific subspaces of the 3D space that need to learn more details than others or to compensate for input 3D or 2D images with holes or of poor quality.

There is thus a need for a solution which is more efficient for handling incomplete input scene data. More generally, another goal is to provide a multiresolution grid-based representation that is suited to any multidimensional scene, 2-D, 3-D, 3-D+t and to other neural graphics primitive tasks than NERFs.

**Summary**

The scope of protection is set out in the independent claims. The embodiments, examples and features, if any, described in this specification that do not fall under the scope of the protection are to be interpreted as examples useful for understanding the various embodiments or examples that fall under the scope of protection.

According to a first aspect, a computer-implemented method comprises:

- obtaining multidimensional coordinates of a plurality of points of a scene included in a virtual space,
- processing said plurality of points by a trained machine learning model, comprising a neural network, said processing comprising, for the multidimensional coordinates of one point of said plurality of points:

  - obtaining a vector of features, comprising features learnt during training and stored in association with a set of K striding grids, with K being an integer greater than or equal to 2,
  - a given striding grid of said set being associated with a given resolution level k, with k integer within 1 and K, said given resolution level k subdividing the virtual space into a number Sk of subspaces, the given striding grid being applied to further subdivide the subspace of said Sk subspaces mapping said multidimensional coordinates, the given striding grid comprising Mk cells, with Mk an integer greater than 1, a total number of cells of the K striding grids being smaller than a maximum over the K resolution levels of a product of the number Mk of cells with the number Sk of subspaces, at least one of said learnt features of said vector of features being obtained from the cell of said striding grid mapping said multidimensional coordinates within said subspace,
  - applying said vector of features as input to the neural network, to produce scene characteristics as output.

It is thus proposed a novel and inventive method that is based on a set of multiresolution striding grids associated with learnt features, said set having smaller dimensions than the multidimensional virtual space including the scene and storing an encoded representation of the scene.

At a given resolution level the virtual space is subdivided into a number of subspaces by applying a subdivision number Nk. Nk may be integer or real and the same or not for each of the multiple dimensions of the virtual space. The striding grid of said resolution level is then used to map and thus further subdivide each of these subspaces. In Machine Learning, particularly in the context of convolutional neural networks (CNNs), the term "stride" refers to a number of pixels by which a filter is moved across an input image. In the following, the grid of a given resolution level is "striding" as it is moved from one subspace to another and thus re-used for each of said subspaces by translation from one subspace to the other. This striding grid of said given resolution level stores in each cell, one or more features that have been learnt simultaneously with the internal features of the neural network. The multidimensional coordinates of a given input point of the scene are thus mapped onto a cell of said striding grid and the at least one learnt feature stored in this cell is extracted.

The learnt features extracted at the different levels of resolution are concatenated to form a vector of learnt features that encodes the input multidimensional coordinates of the input point. This vector of learnt features is then decoded by a neural network, typically a Fully Connected Neural Network, for example a Multi-Layer Perceptron, MLP, which has been trained to output scene characteristics associated with the input multidimensional coordinates.

A first advantage is that the memory space needed to store the multiresolution set of striding grids and associated features is strongly reduced with respect to a dense grid representing the virtual space. For instance, considering a static 3-D scene of which 300 full HD (1920×1080) pictures were acquired, (622M pixels i. e. a total amount of 1.87Gbytes), the dense grid of 2048x2048x2048 cells would include 8.6G points storing each one or more features. With the proposed multiresolution set of striding grids, grids, the total memory size needed to store a representation of the 3-D scene can be dramatically reduced. Indeed, K=11 grids of 81x81x81 vertices, each storing two features (for instance floating points numbers coded with 2 bytes) are sufficient to provide an efficient representation of the 3-D scene, which amounts to only 11,6 Mbytes.

A second advantage is the vectors of learnt features have small dimensions with respect to the dimensions of the scene, while representing compressed information of the whole scene. This allows using a small neural network whose training is facilitated and accelerated with respect to NERFs.

A third advantage is that the proposed striding grids ensure a spatial consistency across subspaces in the sense that neighboring points in the multidimensional space are mapped to neighboring points in the subspaces. For a given subspace associated with a given resolution level k, the striding grid is repeated, namely translated, as many times as the number of subdivisions of the virtual space in each dimension. The features stored in the striding grid are thus transposed exactly in the same way in each subspace. In other words, the striding grids are invariant with respect to translation, unlike hash table used in the prior art. Therefore, neighborhood of the learnt features stored in adjacent cells of the striding grids is preserved. This is not the case with the prior art due to hash tables because of their pseudo-random nature.

The predictive machine learning model formed by the encoder comprising the multiresolution set of striding grids associated with learnt features and configured to generate a vector of learnt features for any input point of the scene, and the decoder configured to produce scene characteristics from the vector of features provided by the encoder, thus provides a very compact representation of the scene that may be stored in a memory space compatible with the limited storage resources of mobile terminal and/or transmitted through communication channels.

The virtual space may be 2-D, 3-D, 4-D, for instance 3-D +t, etc. Correlatively, the striding grids may be 2-Dimensional, 3-D, 3D + t, where t stands for time or N-D with N greater than 3, depending on the virtual space representing the scene.

According to one or more embodiments, said method further comprises using the scene characteristics in a rendering process relating to the scene.

In the following, rendering process refers to a large scale of tasks to be performed by a computer on the output scene characteristics to modify them in view of producing a visualization of the scene. Illustrative and non-limitative examples include novel view synthesis, edition such as deformation, insertion of new objects or special effects, color, texture or light processing, zooming or de-zooming, etc.

According to one or more examples, the virtual space is 2-D and the predictive model encodes and decodes one single high-resolution image of the scene captured by a single camera. The striding grids are also 2-D and the output scene characteristics only comprise color values. For example, the trained machine learning model may be used for compressing a high-resolution input picture of the scene captured by one camera. The multi-resolution set of striding grids may be stored in a memory in place of the input picture, which allows to save memory space. An advantage is that a high resolution 2-D visualization of the scene may be produced from the compact representation stored in memory.

According to one or more embodiments, the obtaining of a vector of features comprises:

- for said at least one resolution level k, obtaining said at least one learnt feature from learnt features stored in vertices of said cell of the at least one striding grid,
- concatenating the obtained features for said at least one resolution level k into said vector of features.

For example, an interpolation of the learnt features stored in the vertices of the cell is performed.

According to one or more embodiments, said subspaces of the virtual space and said cells of the striding grids are hyperrectangles.

An advantage of using hyperrectangular subspaces and hyperrectangular striding grids to encode features is that it ensures translation invariance of stored features and thereby allows them to learn about their neighborhood.

For example, the subspaces of the virtual space are hypercubes, the resolution level k subdivides the virtual space into

$$SkS_k = \lceil N_k \rceil^d$$

subspaces, with d the number of dimensions and $\lceil \ \rceil$ denotes an upper rounding function. The striding grid of resolution level k has $Mk = (Mk_n)^d$ cells, with $Mk_n$ the number of cells according to the $n^{th}$ dimension (1,2,...,d). An advantage of hypercubes is they have the same number of subdivisions/cells on each axis and are thus easier to process.

According to one or more embodiments, the method further comprises transforming the input multidimensional coordinates into corresponding subspace coordinates for a given resolution level. An advantage is the transformed coordinates may be directly used to query the striding grid of the given resolution level.

According to one or more embodiments, the method further comprises, for at least one resolution level k of said K resolution levels, quantizing the transformed multidimensional coordinates for said resolution level k and interpolating the features stored in the vertices of said cell based on said quantized multidimensional coordinates.

According to one or more embodiments, for at least one resolution level k of said K resolution levels, said obtaining of a vector of features further comprises applying a weight of a weighting grid, said weight being associated with said subspace of said resolution level k, to the obtained features, said weights having been learnt during training of said neural network.

A given resolution level k is associated with a corresponding weighting grid of learnt weights. At said given resolution level, the extracted learnt features for an input point mapping a given subspace of the virtual space are multiplied by the corresponding learnt weight. This weighting allows to specialize the common striding grid of a given resolution level to some specific subspaces of the virtual space representing the scene. This further allows to have an additional degree of freedom to learn and increase quality of the rendered picture of the scene.

According to one or more embodiments, said scene being 3-Dimensional, said multidimensional coordinates are obtained for a plurality of points selected along a ray projected from said virtual camera into the virtual space, and said rendering process comprises synthetizing a new picture of the scene on an image plane from a point of view of a virtual camera, distinct from points of views of said one or more cameras placed around the scene, by aggregating the output scene characteristics, comprising color and opacity values, and computing pixel values of the new picture on said image plane of said virtual camera.

In one or more examples, the predictive model encodes and decodes a 3-D static scene and performs a neural graphics primitive task, such as neural radiance fields. Input 2-D pictures captured by one or more cameras at different instants, from different points of views of a 3-D scene are used for training the model. The virtual space is a 3-D bounding box, the input multidimensional coordinates are those of a plurality of points taken along a plurality of rays projected from one or more cameras placed around the scene into the virtual 3-D bounding box representative of the scene, the striding grids are also 3-D and the output scene characteristics of a point comprise color and opacity values.

The predictive model performs a NERFs function representing a 3-D scene and may be applied to synthetizing novel views of the scene, that were not captured by the one or more cameras.

According to one or more embodiments, said scene being 3-Dimensional, said multidimensional coordinates are obtained for a plurality of points of a point cloud providing a sparse representation of the scene, said rendering process comprises synthetizing a new picture of the scene on an image plane from a point of view of a virtual camera, distinct from points of views of said one or more cameras placed around the scene, by projecting the output scene characteristics onto said image plane, said output scene characteristics comprising color, opacity and 3D gaussian scale and orientation values, and computing pixel values of the new picture from said output scene characteristics.

The predictive model performs a 3DGS function representing a 3-D scene as a point cloud and may be applied to synthetizing novel views of the scene in real time. An advantage of the 3DGS function is to provide a better quality of reconstruction of the scene, especially of its geometry, which enables a further extraction of a mesh model.

According to one or more embodiments, said scene being 4-Dimension, said multidimensional coordinates are obtained from a plurality of points of a point cloud representing the scene at a given instant and from a target instant, different from said given instant, said rendering process comprises synthetizing a new picture of the scene at said target instant on an image plane from a point of view of a virtual camera, distinct from points of views of said one or more cameras placed around the scene, by projecting the output scene characteristics, comprising color, opacity and 3D gaussian scale and orientation values at said target instant, onto said image plane of said virtual camera, and computing pixel values of the new picture.

According to one or more examples, the predictive model encodes and decodes a dynamic scene, or 4D XYZT space-time scene. Input 2-D pictures captured by one or more cameras at different instants, from different points of views of a 3-D scene are used for training the predictive model. The virtual space is a 3-D+t bounding box, the input multidimensional coordinates are those of a point cloud providing a sparse representation of the scene at a given time step t. The multiresolution set of striding grids stores features that represent the scene within time steps within an interval of time comprising said different instants. According to one or more examples, the predictive model is trained to perform a neural graphics primitive task, such as neural radiance fields. According to another embodiment, the predictive model is trained to perform a deformation network that models motion and shape deformation of a point cloud representing the scene within the time interval, and associates input multidimensional coordinates of a plurality of points of the point cloud at a time step t with scene characteristics comprising 3D Gaussians (e. g. scales and orientations) and opacities.

The given instant is not necessarily the first instant of the video sequence.

According to a second aspect, a computer-implemented method comprises:

- obtaining at least one input picture captured by one or more cameras placed around a scene,
- obtaining multidimensional coordinates of a plurality of points in a virtual space including the scene, from said at least one input picture,
- training a machine learning model, based on said at least one input picture, said machine learning model comprising a neural network, said training comprising:

  - for said plurality of points, obtaining a vector of features, comprising features learnt during training and stored in association with a set of K striding grids, with K being an integer greater than or equal to 2,

    - obtaining a vector of features, comprising features (fk) learnt during training and stored in association with a set of K striding grids, with K being an integer greater than or equal to 2,
    - a given striding grid (Gk) of said set being associated with a given resolution level k, with k integer within 1 and K, said given resolution level k subdividing the virtual space (VS) into a number Sk of subspaces, the given striding grid (Gk) being applied to further subdivide the subspace of said Sk subspaces mapping said multidimensional coordinates, the given striding grid comprising Mk cells, with Mk an integer greater than 1, a total number of cells of the K striding grids being smaller than a maximum over the K resolution levels of a product of the number Mk of cells with the number Sk of subspaces, at least one of said learnt features (fk) being obtained from the cell of said striding grid mapping said multidimensional coordinates within said subspace,

- applying said vector of features as input to the neural network, to produce scene characteristics as output,

- using the scene characteristics in a rendering process relating to the scene, comprising generating a rendered picture of the scene based on said output scene information values,

- determining whether a stopping criterion has been reached, based on a loss between said generated rendered picture and said input picture captured by said camera,

- while the stopping criterion has not been reached and before executing said new iteration, - backpropagating the loss, said features stored in said set of multiresolution grids of said encoder, being updated along with internal parameters of the neural network of said decoder, based on said loss.

According to one or more examples, one or more stopping criteria may be applied, the process being stopped as soon as one of them is reached. For instance, one stopping criterion is representative of a required level of convergence between the rendered and the ground truth pictures provided by the input cameras. Another stopping criterion may be a predefined number of iterations.

According to one or more embodiments, said decoder comprises a neural network which is a multilayer perceptron, MLP.

Thanks to the proposed multiresolution set of striding grids encoding learnt features, a more compact representation of the scene is provided to the neural network, which allows to use a smaller neural network, for example a MLP, and to train the predictive model more quickly.

In one or more embodiments, a set of multiresolution of weighting grids comprising, for at least one resolution level k of said K resolution levels, a weighting grid storing weights associated with said subspaces of said resolution level k. Said mapping further comprises applying the weight of said weighting grid associated with said subspace to the obtained features, before the concatenating, and said training comprises updating the weights stored in said weighting grids. The weights are learnt during training of the ML model.

According to one or more embodiments, said method further comprises training a Generative Adversarial Network to transform the multiresolution set grid of striding grids associated with the learnt features into a second multiresolution set of second striding grids initialized by said multiresolution set of striding grids, said training comprising alternatively training said generator to generate rendered pictures or video and said discriminator to discriminate between said rendered pictures and input pictures captured by said at least one camera, wherein the striding grids of the second multiresolution set are associated with second features that are updated while the discriminator is able to discriminate between rendered pictures generated by said generator and input pictures captured by said at least one camera.

The proposed training method relies on a set on input pictures captured from one or more points of view of the scene. However, most of the times, these input pictures do not cover all the virtual space including the scene. A consequence is that synthesis of novel views is efficient for a limited number of points of view and that synthesis of a novel view corresponding to a region of interest of the scene not seen during the training phase results in poor quality rendered pictures.

This additional phase of training allows to alleviate this issue by producing an improved set of multiresolution striding grids which is specifically suited to provide completion of these regions of interest for which input data is lacking. It is thus particularly adapted to 3-D to N-D scenes.

According to one or more embodiments, this second training phase is also applied to transform the associated multiresolution set of weighting grids.

According to one or more examples, the second machine learning model comprises a CNN. An advantage of the proposed set of multiresolution striding grids is that they are a collection of small size grids, which is particularly adapted to CNNs.

According to one or more examples, the striding grids are regular and invariant with respect to translation. This allows to preserve spatial structure of the stored featured, and thus neighborhood between them and CNNs are natively configured to work well with this type of localized structured input data.

According to a third aspect, an apparatus comprises means for:

- obtaining multidimensional coordinates of a plurality of points of a scene included in a virtual space,
- processing said plurality of points by a trained machine learning model, comprising a neural network, said processing comprising, for the multidimensional coordinates of one point of said plurality of points:

  - obtaining a vector of features, comprising features learnt during training and stored in association with a set of K striding grids, with K being an integer greater than or equal to 2, a given striding grid of said set being associated with a given resolution level k, with k integer within 1 and K, said given resolution level k subdividing the virtual space into a number Sk of subspaces, the given striding grid being applied to further subdivide the subspace of said Sk subspaces mapping said multidimensional coordinates, the given striding grid comprising Mk cells, with Mk an integer greater than 1, a total number of cells of the K striding grids being smaller than a maximum over the K resolution levels of a product of the number Mk of cells with the number Sk of subspaces, at least one of said learnt features being obtained from the cell of said striding grid mapping said multidimensional coordinates within said subspace, and

- applying said vector of features as input to the neural network, to produce scene characteristics as output.

According to one or more embodiments, the means comprise:

- at least one processor,
- at least one memory storing instructions that, when executed by the at least one processor, cause the apparatus to perform the method according to the first aspect, said trained machine learning model and said multiresolution set of striding grids.

According to one or more embodiments, the at least one memory further stores the set of weighting grids.

According to a fourth aspect, an apparatus comprises means for:

- obtaining at least one input picture captured by one or more cameras placed around a scene,
- obtaining multidimensional coordinates of a plurality of points in a virtual space including the scene, from said at least one input picture,
- training a machine learning model, based on said at least one input picture, said machine learning model comprising a neural network, said training comprising:

for the multidimensional coordinates of one point of said plurality of points:

- obtaining a vector of features, comprising features learnt during training and stored in association with a set of K striding grids, with K being an integer greater than or equal to 2,
- a given striding grid of said set being associated with a given resolution level k, with k integer within 1 and K, said given resolution level k subdividing the virtual space into a number Sk of subspaces, the given striding grid being applied to further subdivide the subspace of said Sk subspaces mapping said multidimensional coordinates, the given striding grid comprising Mk cells, with Mk an integer greater than 1, a total number of cells of the K striding grids being smaller than a maximum over the K resolution levels of a product of the number Mk of cells with the number Sk of subspaces, at least one of said learnt features being obtained from the cell of said striding grid mapping said multidimensional coordinates within said subspace, applying said vector of features as input to the neural network, to produce scene characteristics as output, and

- using the scene characteristics in a rendering process relating to the scene, comprising generating a rendered picture of the scene based on said output scene information values,
- determining whether a stopping criterion has been reached, based on a loss between said generated rendered picture and said input picture captured by said camera,
- while the stopping criterion has not been reached and before executing said new iteration, backpropagating the loss, said features stored in said set of multiresolution grids of said encoder, being updated along with internal parameters of the neural network of said decoder, based on said loss.

According to one or more embodiments, the means comprise:

- at least one processor,
- at least one memory storing instructions that, when executed by the at least one processor, cause the apparatus to perform the method according to the second aspect, said machine learning model and said multiresolution set of striding grids.

According to one or more embodiments, the at least one memory further stores the set of weighting grids.

According to a fifth aspect, an electronic device comprises an apparatus according to the third aspect. In one or more embodiment, the electronic device further comprises an apparatus according to the fourth aspect.

According to a sixth aspect, a computer program comprises instructions for causing a computer to perform a method according to the first or the second aspect.

According to a seventh aspect, a non-transitory computer-readable medium comprises program instructions stored thereon for causing a computer to perform a method according to the first or the second aspect.

The apparatuses, the electronic device, the computer program product and the non-transitory computer-readable recording medium provide at least the same advantages as the methods according to the first and second aspects.

Of course, the above-mentioned embodiments can be combined with one another.

## Brief Description of the Figures

Some embodiments are now described, by way of example only, and with reference to the accompanying drawings, in which:

- Figure 1, already presented, schematically illustrates a technique, called NERF, based on a neural network that is trained to learn from a small set of pictures captured in a scene, a underlying function that allows for synthesis of novel views from different virtual camera views, according to the prior art,

- Figure 2, already presented, schematically illustrates a projection of rays from a virtual camera through a scene for reconstruction of a picture of the scene on a image plane,

- Figure 3, already presented, schematically illustrates a method, called Instant NGP, that represents a virtual space including a scene with multiresolution grids, a position in one of the grids being mapped to an index in a list of features, by applying a hash function, according to the prior art,

- Figure 4 schematically illustrates an example of an architecture of an electronic device comprising an apparatus for predicting content information representative of a scene according to one or more exemplary embodiments,

- Figure 5A is a flowchart schematically presenting a method of generating a rendering picture of a scene according to one or more exemplary embodiments,

- Figure 5B is a flowchart schematically describing a step of obtaining a vector of features from input multidimensional coordinates of a point in a virtual space including a scene, according to one or more exemplary embodiments of said method,

- Figure 6A schematically illustrates an example of subdivision of the virtual subspace in subspaces at a given resolution level, according to one or more exemplary embodiments,

- Figure 6B schematically illustrates the principle of a set of multiresolution striding grids used to represent a virtual space including a scene according to one or more exemplary embodiments,

- Figure 6C schematically illustrates the storage of features in the set of multiresolution striding grids and the concatenation of features extracted from the striding grids of different resolution levels to form a vector of features representing the input multidimensional coordinates of a point, according to one or more exemplary embodiments,

- Figure 6D schematically illustrates weighting of the extracted features by weights stored in a multiresolution set of weighting grids associated with said multiresolution set of striding grids, according to one or more embodiments,

- Figure 7 schematically illustrates a technique, called 4DGS, based on a neural network that is trained to learn a point cloud and associated 3D Gaussians representing a dynamic scene, allowing for synthesis of novel views, according to the prior art,

- Figure 8 schematically illustrates an example of an architecture of an apparatus for training a machine learning model to predicting content information representative of a scene according to one or more exemplary embodiments,

- Figure 9A is a flowchart schematically describing a method of training a machine learning model to predict content information representative of a point of a virtual space including a scene, from input pictures captured by one or more cameras placed around the scene, according to one or more exemplary embodiments,

- Figure 9B is a flowchart schematically describing a first training phase of the machine learning model, according to one or more embodiments,

- Figures 10A and 10B schematically illustrate examples of a GAN architecture involved in the second training phase, according to one or more embodiments, and

- Figure 11 schematically illustrates an example of hardware structure of an apparatus for generating a rendered picture of a scene and/or for training a machine learning model to predict content information representative of points of a scene, to be used for generating the rendered picture, according to one or more embodiments.

## Description of Embodiments

Detailed example embodiments are disclosed herein. However, specific structural and/or functional details disclosed herein are merely representative for purposes of describing example embodiments and providing a clear understanding of the underlying principles. However, these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

In the following, different exemplary embodiments are described of a method and apparatus for producing output scene characteristics from multidimensional coordinates of a plurality of points of a scene using a trained machine learning model and a multiresolution set of striding grids. Correlatively, exemplary embodiments are disclosed of a method and apparatus for training the machine learning model. In the examples detailed hereinafter, focus is made on a 3-D scene captured by a plurality of cameras placed around the scene and on an application of novel view synthesis.

Of course, methods, apparatuses and system that are disclosed herein are not limited to this type of scene and this example of application. On the contrary, they also apply to any type of scene that may be 2-D to N-D, with D greater than 3, like for instance 3D+t sequences. As will be described hereinafter, the produced scene characteristics may be further used to perform any kind of image or video processing, including transformation, deformation, enhancement, etc. Among them, rendering tasks may be carried out to produce a suitable representation of the scene, for example from a novel point of view. Other examples of applications include image or video content creation, mobile photography, involving creation of special effects or stylized pictures, e.g. cartoon-like, etc.

Machine Learning (ML) provides computer systems with the ability to perform tasks, without explicitly being programmed, by making inferences based on patterns found in the analysis of data. Machine learning explores the study and construction of algorithms, also referred to herein as tools, that may learn from existing data and make predictions about new data. Such machine-learning algorithms operate by building a ML model from example training data in order to make data-driven predictions or decisions expressed as outputs or assessments. Although example embodiments are presented with respect to a few machine-learning tools, the principles presented herein may be applied to other machine-learning tools.

In example embodiments, there are two modes for ML: supervised ML and unsupervised ML. Supervised ML uses prior knowledge (e.g., examples that correlate inputs to outputs or outcomes) to learn the relationships between the inputs and the outputs. The goal of supervised ML is to learn a function that, given some training data, best approximates the relationship between the training inputs and outputs so that the ML model can implement the same relationships when given inputs to generate the corresponding outputs. Unsupervised ML is the training of an ML algorithm using information that is neither classified nor labeled and allowing the algorithm to act on that information without guidance. Unsupervised ML is useful in exploratory analysis because it can automatically identify structure in data.

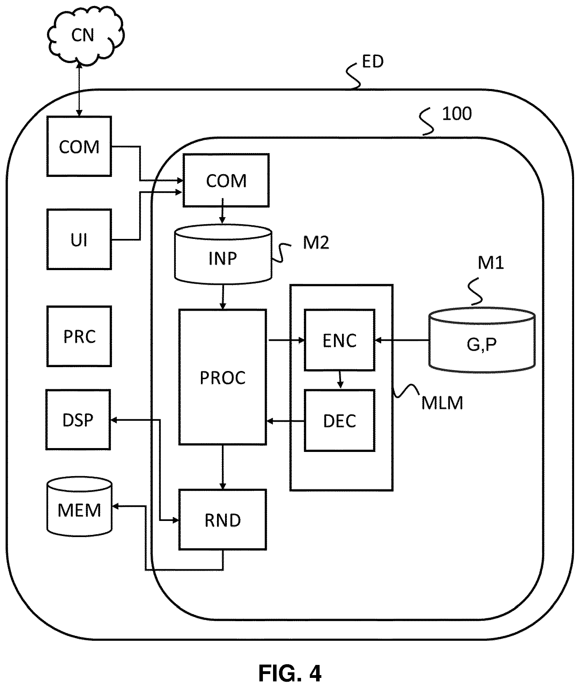

In relation with FIG. 4, an apparatus 100 according to one or more embodiments is presented, in an exemplary context in which it may be deployed. In the example of FIG. 4, said apparatus 100 comprises a trained ML model MLM comprising an encoder ENC and a decoder DEC. It further comprises a memory M1 in which is stored a multiresolution set G of K grids {Gk}, with K an integer greater than 2 and k an integer comprised within 1 and K. Said multiresolution set G of grids stores features that have been learnt during training of the MLM as will be described therein and that are used by the encoder ENC to encode input multidimensional coordinates of points of a virtual space including the scene. In one or more examples, said model MLM is stored in said memory M1 with said multiresolution set of grids or in another memory. The decoder DEC comprises a neural network, for example, a Multi-Layer Perceptron, MLP.

According to one or more embodiments, the apparatus comprises communication means COM for receiving input data INP, comprising for example an input command to generate a rendered picture of the scene, comprising for example pose information of a virtual camera and/or a resolution of the picture to be rendered. This input data may be stored in a memory M2. The memory M2 may be distinct or not from the memory M1.

In one or more examples, the apparatus 100 comprises:

- means OBT for obtaining input multidimensional coordinates of a plurality of points of a scene in referential system of the scene,
- means PROC for applying the input multidimensional coordinates of the plurality of points to the ML model MLM and to get scene characteristics for the plurality of points as output.,
- means RND for using said output scene characteristics in a rendering process of the scene.

According to one or more embodiments and as illustrated by FIG. 4, the apparatus 100 is integrated into an electronic device ED, for example a laptop, a smartphone, a tablet, etc. Such an electronic device ED has the hardware structure of a computer and comprises at least one memory MEM and at least one processor PROC. It further comprises a communication means COM through data are sent to and received from the apparatus 100. For example, the electronic device ED may be configured to send input data INP to the apparatus 100 to command generation of a rendered picture of the scene S or performance of any other rendering process based on the scene characteristics. In return, the electronic device ED may be configured to get the rendered picture RP from the apparatus 100 through this communication means. The communication means may also be configured to send and receive information signals from external devices, for examples through communication networks CN. According to one or more embodiments, the electronic device is configured to receive the trained MLM and the multiresolution set of striding grids through the communication means and to store them in the memory MEM. They may then be charged into the memory M1 of the apparatus 100 for further use.

The electronic device ED may further comprise a user interface UI through which a user may input a command and an image display means DSP for example a screen.

In alternative, the apparatus 100 may not be embedded in the electronic device ED, but connected to it through communication links. For example, the apparatus 100 may be implemented by one or more virtual machines in a cloud environment.

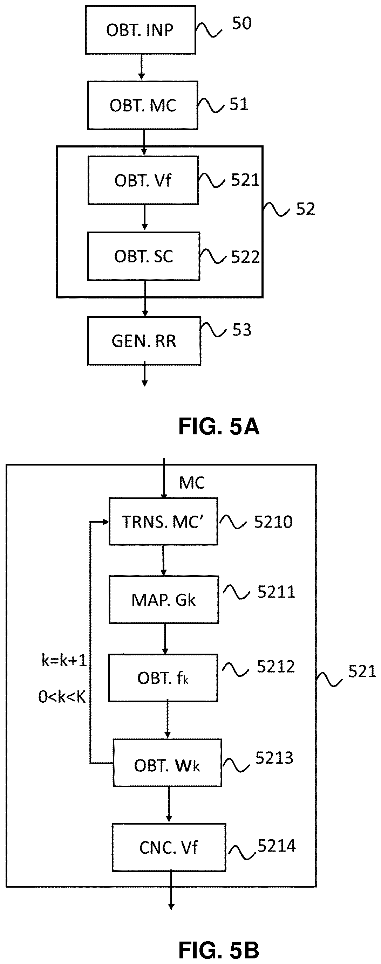

In one or more examples, the apparatus 100 is configured to implement a method, that will be described hereinafter in relation with FIG. 5A and 5B.

FIG. 5A shows a flowchart of a method for generating a rendered representation of a scene according to one or more exemplary embodiments. For example, this method is implemented by the apparatus 100 of FIG. 4. While the steps of the method are described in a sequential manner, the man skilled in the art will appreciate that some steps may be omitted, combined, performed in different order and / or in parallel.

In the following, we will generally refer to the example of a 3-D scene S illustrated by FIG. 2, to a ML model MLM train to perform a NERFS graphics primitive task and to a rendering application of novel view synthesis. However, as the method is not limited to this example, adaptations to 2-D, 3-D+t or N-D scenes will also be described when needed.

In this example, the referential system of the scene S is (OXYZ) and corresponds to borders of a bounding box representing the virtual space VS including the scene.

In a step 50, input data INP are obtained, for example from a memory M1 of the apparatus 100 or directly received from the communication means COM. They comprise an input command comprising for example pose coordinates (position and orientation) of a virtual camera from which a novel view of the scene is to be generated. For a 2-D scene, the input command may comprise information about a resolution of the picture to be rendered. According to other embodiments, the input command may indicate special effects to be applied or any other processing to be performed when generating the rendered picture of the scene.

In a step 51, multidimensional coordinates MC of at least one point in a virtual space VS including the scene S are obtained based on the input data INP. For example, multidimensional coordinates of a plurality of points along rays traced from the virtual camera trough the virtual space VS are determined based on the pose of the camera obtained with the input data INP. In the 2-D case, multidimensional coordinates are determined for points depending on the resolution obtained in the input data INP. At the end of step 51, the multidimensional coordinates of a plurality of points have been determined. For example, they are stored in a memory M1 of the apparatus 100.

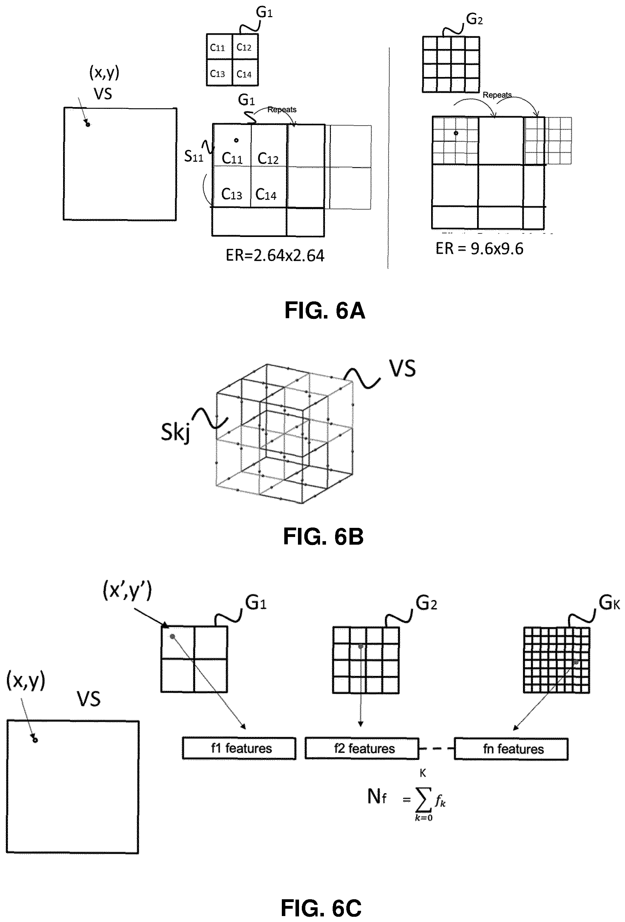

In a step 52, for each of said points, a vector of features Vf representing said point is generated, by mapping said multidimensional coordinates onto at least one striding grid (Gk) of a multiresolution set G of K striding grids storing features, with K being an integer greater than or equal to 2, respectively associated with said K resolution levels. Said mapping will be described in more details in relation with FIG. 5B. Said multiresolution set G of striding grids will be detailed hereinafter in relation with FIGs 6A to 6C.

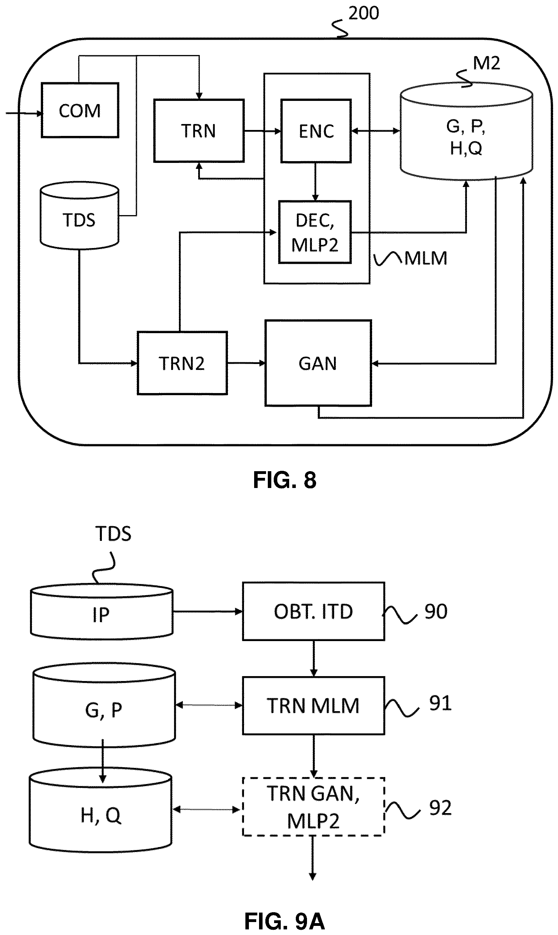

In a step 53, the vector of features Vf generated for each point is applied as input to the decoder DEC of the apparatus 100 and content information values at said point are produced as output. The decoder DEC comprises a neural network MLP that has been trained beforehand in a supervised manner, based on input pictures captured by one or more cameras placed around the scene S and the features stored in the multiresolution set G of striding grids {Gk} have been learnt during the training process, as will be detailed hereinafter, in relation with FIG. 8.

In a step 54, based at least on the scene characteristics obtained for the plurality of points, a rendered representation RR of the scene S is generated. Information comprised in the input command INP may also be considered, for instance for generation of a rendered representation with special effects.

According to one or more exemplary embodiments, for a 3-D scene; a volume rendering technique is used to project/render the virtual scene from a new target point of view provided in the input data INP onto an image plane of a virtual camera having this new point of view. Rays are traced from the virtual camera into the virtual space VS including the scene S. Along each ray, multidimensional (here 3-D position) coordinates of a plurality of points are input to the ML model MLM which outputs scene characteristics. In this example, scene characteristics comprise colors and opacities that are then aggregated through volume rendering for each ray to predict the final color of a corresponding pixel in the rendered picture, as illustrated in FIG. 2.

Referring now to FIG. 6A, an exemplary multiresolution set G of grids {G1, G2, ...GK} is now described.

In the general case, the multiresolution set G of grids comprises K striding grids, each striding grid being associated with a resolution level k, with k between 1 and K. For example, K is equal to 10. For sake of simplicity, the grids are represented in 2-D for the two first levels of resolutions k =1 and k = 2.

In the general case of a N-Dimensional scene, with N an integer greater than or equal to 2, we consider a virtual space having a resolution (Res1, Res2,...ResN). At each resolution level k, the virtual space VS is subdivided in a plurality Sk of subspaces. At a given resolution level k; the virtual space VS is subdivided into a plurality of subspaces Sk=Sk1.Sk2....SkN subspaces with Skn the space subdivision on axis n, with n an integer between 1 and N, by subdividing each dimension according to a subdivision number Nk, that may be integer or real and the same or not for each dimension. Assuming Nk is the same for each dimension, the total number of subspaces

Sk is: $S_k = \lceil N_k \rceil^3$ .

An example of subdivision in 2x2 subspaces of a 3-D virtual space VS is illustrated by FIG. 6B. In the example of FIG. 6A, the same subdivision number Nk is used for each dimension x, y, that is a regular subdivision is applied. Moreover, the subdivision number N1 at the first resolution level is 1.38 and the subdivision number N2 at the second resolution level is 2.4.

At each resolution level k, the striding grid Gk has a resolution Rk, with d integer comprised within 1 and N. In an illustrative and non-limitative example, in 2-D, N = 2 and Rk =Mkx*Mky, with Mkx and Mky integers, that are non-zero. The striding grid Gk is applied to each of the Sk=Nk$^d$ subspaces of resolution level k, which are thus further subdivided into Mkx*Mky cells. At resolution k, an effective resolution of ERk = (Nkx*Mkx)*(Nky*Mky) is obtained. In the example of FIG. 6A, ER1 = 1.38*2*1.38*2 = 2.76*2.76 and ER2 = 2.4*4*2.4*4 = 9.6*9.6.

Referring now to FIG. 6C, each subdivision of a grid Gk stores at least one feature fk, having a real value. For example, the grid Gk stores Nf$_k$=2 features in each vertex Vx of each of its subdivisions.

In relation with FIG. 5B, the step 52 of obtaining a vector of features VF that encodes the input multidimensional coordinates MC of the point is now detailed according to one or more exemplary embodiments.

Back to the general case, the striding grid Gk associated with each resolution level k comprises Mk =Mk1*Mk2*...*MkN cells.

In a step 5210, for each resolution level k, the multidimensional coordinates MC of the input points obtained in step 51 are transformed into corresponding subspace coordinates MCk'= (x'$_{k1}$,x'$_{k2}$,...x'$_{kN}$) with the following formulas:

$$x'_{kn} = \frac{x_n}{Res_n} mod \left(\frac{1}{Sk_n}\right) * Mk_n \quad \text{(Equation 1)}$$

where mod stands for the modulo operator and * for the multiplication operator, and

$x'_{kn} \in [0, Mk_n]$ being the relative coordinate of the input point on the axis corresponding to the n$^{th}$ dimension.

In a sub-step 5211, the transformed multidimensional coordinates MC' of the current point are used to query the multiresolution set G of grids {Gk}. For a resolution level k, the multidimensional coordinates MC' are comprised within a given subspace Skj, with j an integer between 1 and Sk. The striding grid Gk is applied to further subdivide this subspace Skj. The multidimensional coordinates of the current point fall within a cell SDki of the grid Gk, with i an integer comprised within 0 and Mk of the grid Gk.

According to one or more embodiments, the transformed multidimensional coordinates MC'k of the input points obtained in 5210, are applied a discretization/quantization operation for each resolution level k. In an example, we consider 3-D coordinates (xk',yk',zk') (or (xk',yk',zk',tk') for 3-D +t); that are normalized between 0 and 1.

More precisely, if (Mkx,Mky,Mkz) is the resolution of the current grid Gk in 3-D (or (Mkx,Mky,Mkz,Mkt) in 4D), the quantized coordinates of an input point at level k are:

$$x_{qk} = x'_k * M_{kx} \qquad \text{Equation (2)}$$

$$y_{qk} = y'_k * M_{ky} z_{qk} = z'_k . M_{kz}$$

Optionally,

$$xt_{qk} = t'_k * M_{kt}$$

Next, considering the integer values surrounding each of these coordinates, they correspond to the coordinates of the 8 vertices of the striding grid in 3D (or 16 neighbors in 4D) that surround the input point. These vertices define a cell of the striding grid Gk.

In a sub-step 5212, the features {fk} stored in association with this cell SDki are extracted. The coordinates of these neighboring vertices of the current grid Gk are used to fetch their stored associated features fk. Then, according to one or more embodiments, a linear interpolation of these features is performed to generate the features that would correspond exactly to the coordinates (x,y,z) or (x,y,z,t) of the input point.

According to one or more exemplary embodiments, these features {fk} are associated with the vertices of the cell, that is N$_{fk}$ features are stored in association with each of the four vertices of the cell.

An advantage is that the proposed striding grids ensure a spatial consistency across subspaces in the sense that neighboring points in the multidimensional space are mapped to neighboring points in the subspaces of the virtual space. For a given resolution level k, the striding grid Gk is translated from one subspace to the next, as many times as its number of subspaces. The features {fk} stored in the striding grid Gk are thus transposed exactly in the same way in each subspace. Thus, the striding grids are invariant with respect to translation.

These mapping operations are repeated for one or more resolution levels, for example the K resolution levels. Then, in sub-step 5214, as illustrated by FIG. 6C, the extracted features {fk} for the K different resolution levels are concatenated to form a vector of features Vf, associated with the multidimensional coordinates MC of the current point. Vf comprising up to K.N$_{fk}$ features.

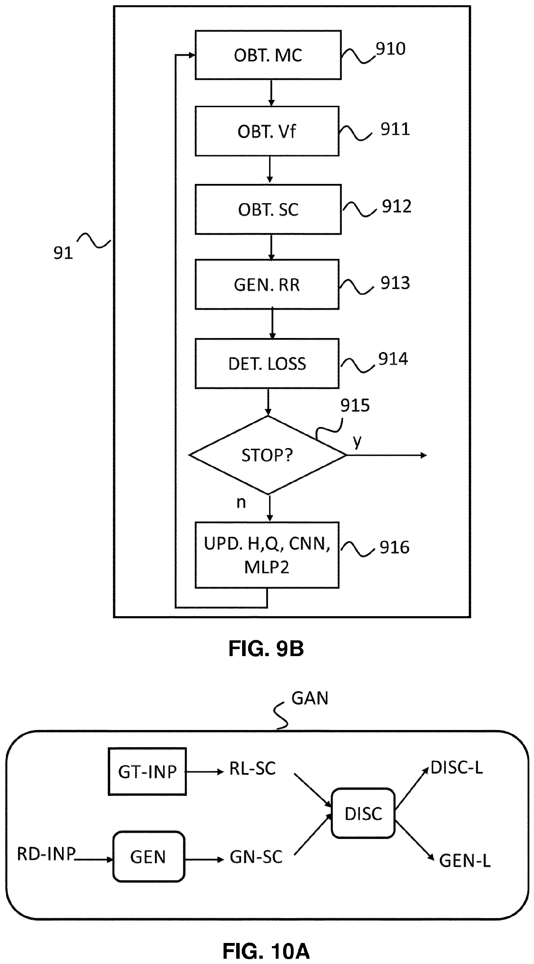

The features {fk} stored in the striding grids {Gk} are learnt during the training of the machine learning model MLM, along with internal parameters of the decoder DEC, as will be described below in relation with FIGs 9A and 9B.

An example of multiresolution set G of 3-D grids is given below for a 3-D static scene and input pictures of 1920×1080 pixels. It comprises K = 10 resolution levels. All the striding grids Gk have the same resolution Rk = 81$^3$. Each node of the grid is associated with Nf = 2 features. At each resolution level k, the space is divided into Sk subspaces according to a subdivision number Nk. In this example, Sk is a logarithmic function of the resolution level k.

G1: R1 =$81^3$, $Nf_1$=2, N1= 1.38} -> ER1=($N1^3$*M1) = $(1.38*81)^3$=111.78$^3$

G2: {R2 =$81^3$, Nf=2, N2=1.90} -> ER2= 153.9$^3$

G3: {R3 =$81^3$, Nf=2, N3=2.64} ->ER3=213.84$^3$

G4: {R4 =$81^3$, Nf=2, " N4=3.64} -> ER4= 294.84$^3$

G5: {R5 =$81^3$, Nf=2, N5=5.03} -> ER5= 407.43$^3$

G6: {R6 =$81^3$, Nf=2, N6= 6.96} -> ER6= 563.76$^3$

G7: {R7= $81^3$, Nf=2, N7= 9.62} -> ER7= 779.22$^3$

G8: {R8=$81^3$, Nf=2, N8=13.30} -> ER8= 1077.3$^3$

G9: {R9=$81^3$," Nf=2, N9=18.38} -> ER9= 1488.78$^3$

G10: {R10=$81^3$, Nf=2, N10=25.40$^3$} -> ER10= 2057.4$^3$

So, with this grid configuration, the effective resolution of the virtual space is

$$R_{eff} = max_k \left( R_k * N_k{}^3 \right) = 2057.4^3$$

and the concatenated feature vector size is: $Nf * K = 2 * 10 = 20$.

It should be noted that, as the features {fk} stored in the striding grids {G1, G2, ...,GK} are reused in the Sk subspaces of a resolution level k, a same vector of features Vf may be generated for more than one distinct point multidimensional coordinates. There is thus a risk of collisions that is strongly reduced by the concatenation 523.

However, even with concatenation, it may happen that two points belonging to a same subspace Skj, with j an integer within 1 and Sk, at a resolution level k and to different subspaces at next resolution level k+1 get the same combination of features. This is due to rate of subdivisions which is too high. Conversely, a rate of subdivisions which is too low does not allow to reach high fidelity reconstruction. According to one or more embodiments, the subdivision number Nk is a logarithmic function of the resolution level k, which provides a good trade-off that minimizes the risk of collisions. FIG. 6A, already presented, gives a concrete example of subdivisions numbers Nk (N1 = 1.38 and N2 = 2.4) set according to a logarithmic function.

According to one or more exemplary embodiments and as illustrated by FIG.5B, step 52 further comprises a sub-step 5213 of applying weights {w$_{l}$} to the extracted features {fk} before concatenation 5214.

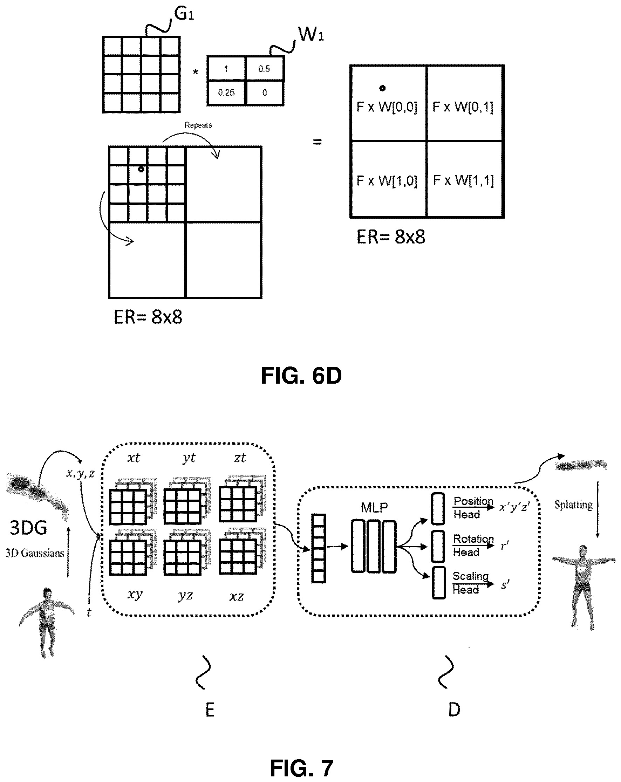

These weights {wkl} are stored in a multiresolution set of weighting grids {Wkl} . The weighting grid of a resolution level k has as many weights as the resolution level k has subspaces of the virtual space, as illustrated by FIG. 6D. The weights of the weighting grids are learnt during training of the MLM.

At resolution level k, the extracted features fk are applied the weight corresponding to the subspace Skj to which the input multidimensional coordinates belong, before the concatenating 523.

According to one or more examples, the weights {wkj} have real values. In the example of FIG. 6D, the weighting grid W11 of resolution level k=1 comprises four weights w111=1, w112 = 0.5, w113=0.25 and w114=0, each associated with one of the four subspaces.

According to one or more exemplary embodiments, these weights are learnt during training of the ML model MLM, along with internal parameters of the neural network of the decoder DEC and with the features {fk} stored in the striding grids {Gk}, as will be detailed further in relation with FIGs 9A and 9B.

Such a weighting with weights {wki} that are learnt jointly with the weights {fk} allows to specialize the common striding grid Gk of a given resolution level to some specific subspaces. In one or more examples, the weight values are assumed to range between 0 and 1. For example, in a region of the scene without high frequency details and where a low resolution is needed, the learnt weights associated with the cells of the weighting grid mapping that region at resolution levels k with high effective resolutions, will be close to zero or even null. On the contrary, in regions of the scene with high frequency details and where a higher resolution is needed to faithfully represent content of the scene, the learnt weights will tend to 1. This further allows to have an additional degree of freedom to learn and increased quality of the rendered picture of the scene.

The above-described method may apply to any type of scene S, with 2, 3, 4 or more dimensions. According to other embodiments, for example related to a 2-D scene, the input data INP comprise a target resolution of a picture to be rendered. In this case, a picture rendering technique is used to determine a number of multidimensional coordinates MC of points of the 2D scene that will allow to get a rendered picture of the target resolution. The multidimensional coordinates are input to the ML model ML that produces color values as output, which are then aggregated to get the rendered picture.

According to one or more examples, a 3-D scene is considered, but the underlying implicit function learnt by the ML model MLM is another graphics primitive task than NERFs, namely a task implementing a technique called 3DGS, for 3-D Gaussian Splatting, for instance described in the document by Kerbl et al., entitled "3D Gaussian Splatting for Real-Time Radiance Field Rendering", published in ACM Trans. Graph., Vol. 42, No. 4, in August 2023. With this technique, a sparse representation of the 3-D scene is provided by a point cloud $\omega$ in a 3D space $\Omega \in R^{\wedge}(N * 3)$, where N represents the number of points. Each point $p \in \Omega$ is associated with scene characteristics comprising opacity, color and also 3D Gaussians. 3D Gaussians comprise a Gaussian associated with a given size or scale in each XYZ direction along with an orientation of that Gaussian.

The color of each Gaussian is described by a color function f which is a linear combination of functions called "spherical harmonics", parametrized with learnable parameters (typically 48). A reason is that color of an object varies according to the viewing angle (e.g. due to light reflections). This special function encodes the color of each Gaussian as a function of the viewing angle and provides three numerical RGB values as output., which allows to accurately model the colors in reconstructed scenes.

Of course, learning 48 parameters (related to color) for each point in the cloud represents a huge amount of data to store, especially for a large scene with many Gaussians. Instead, it is herein proposed to apply the above-described multiresolution set of striding grids to encode the 48 parameters representing the color function f learnt per point, into a more compact data structure. More precisely, for each position $(x,y,z)$ of a 3D Gaussian in the scene space, a vector of features encoding its 48 color parameters may be generated in the same way as described above. Then, the above-described decoder, namely a small MLP, is adapted to predict the 48 features from the encoded vector of features.

As for NERFs, in order to learn the point cloud, it is further used to generate an output rendered image corresponding to ground truth images captured from different points of view by one or more cameras with known poses. Rendering of an image from the point cloud $\Omega$ is performed by a method called Gaussian Splatting. Then, a loss is computed between the rendered and the ground truth images. As classically done in ML, this loss function is backpropagated to the point cloud. Using gradient descent, the positions and other scene characteristics associated to the points of the cloud are updated until convergence.

According to one or more examples, a 3-D+t, namely a dynamic scene S is considered, in relation with FIG 7. With such 3-D+t scene S, the input data INP comprise a new target point of view of the scene S and at least one time step or instant within a given time interval corresponding to the sequences of pictures or videos captured by the one or more real cameras placed around the scene S. The underlying implicit function performed by the ML model MLM may be the NERF or another graphics primitive task, for example implementing a dynamic 3DGS technique, disclosed by Luiten et al. in the document entitled "Rendering Dynamic 3D Gaussians: Tracking by Persistent Dynamic View Synthesis", published in ACM Trans. Graph., Vol. 42, No. 4, in August 2023.

Indeed, with a dynamic scene, the point cloud moves through space at each time step. With the Dynamic 3DGS technique, new positions of each point resulting from the motion, namely a new point cloud, and their associated scene characteristics, are learnt at each time step. The point positions as well are learnt during the learning phase. For instance, in order to learn the displacement of the point cloud, a new one $O_{t+1}$ is initialized at given timestep t+1 adding small displacements to $\Omega_t$. It is then used to generate an output rendered image corresponding to ground truth images captured from different points of view by a setup of multiple cameras with known poses. Rendering of an image from the point cloud $\Omega_{t+1}$ is performed using Gaussian Splatting. Then, a loss is computed between the rendered and the ground truth images. As classically done in ML, this loss function is backpropagated to the point cloud at time step t+1. Using gradient descent, the positions and other scene characteristics associated to the points of the cloud are updated until convergence of the displacement. This is done iteratively from one time step to the next, until the entire motion of the point cloud is learnt through time.

Once $\Omega_{t+1}$ is learnt, the learning process is re-iterated until the point clouds associated with all time steps are learnt.

While this method has proven to work, its main drawbacks are an enormous storage cost, a long training time, because each time step must be optimized one after the other until the entire motion of the scene is learnt, and the need for multiple cameras to capture multiple input images from different point of views of the 3-D scene at the same time, which results in an impractical setup made of multiple calibrated cameras.

In order to alleviate the issues of Dynamic 3DGS, another technique called 4DGS, inspired from 3DGS and described in the document by Wu et al., entitled "4D Gaussian Splatting for Real-Time Dynamic Scene Rendering", published by ArXiv, in October 2023, and available at the website: https://doi.org/10.48550/arXiv.2310.08528, is specifically adapted for reconstructing a dynamic 3-D scene., 4DGS proposes to learn and store only one point cloud, at initial time step 0. Instead of estimating a new point cloud at each time step, a ML model, called deformation network DN, which takes as inputs the positions of points of the point cloud $\Omega_t$ (t=0) and a time step t, is trained to predict displacement (or motion) of those points at corresponding time step t, as well as associated scene characteristics.

As shown in FIG. 7, the deformation network DN takes as inputs points $(x,y,z,t)$ and predicts a new position $(x(t+1),y(t+1),z(t+1))$ at t+1 along with associated opacities, colors, Gaussian scales and orientations.

The deformation network is made of two parts: An encoder E which is made of multiple 2D planes of features. These planes are queried using the input $(x,y,z,t)$ to extract features which are then concatenated to give a vector of features. This vector of features is then applied to a decoder D, comprising a neural network, for example an MLP. The features of the encoder E are learnt altogether with internal parameters of the decoder D.

Advantages of the 4DGS technique over the previous 3DGS technique are that it allows memory space saving and faster reconstruction of motion of 3-D scenes. Moreover, 4DGS proposes a solution that allows to learn dynamic scenes with a monocular setup, for example only one monocular camera of a cellphone camera.

According to one or more embodiments, the proposed method described therein is applied to the point

cloud $\Omega_t$ of the 4DGS technique.

The deformable network DN of FIG. 7 using 2D planes of learnable features is replaced with the ML model MLM of apparatus 100 previously described, in which the encoder ENC uses a set of multiresolution grids comprising 4-D (XYZT) striding grids and is trained to produce vectors of features Vf encoding input points (x,y,z,t) of the point cloud. The 4D striding grids map a virtual space VS including the point cloud of the scene S and thus having 3-D+t (XYZT) dimensions. The decoder DEC is simultaneously trained to output associated scene characteristics comprising opacities, color and Gaussian scales and orientations. According to one or more examples, rendering of a picture of the scene from the point cloud $\Omega_{t+1}$ is performed by the Gaussian Splatting technique.

An advantage of the method proposed therein is that it provides much faster convergence than 4DGS, while better reconstructing high-level details

In relation with FIG. 8, an apparatus 200 for training a ML model MLM to generate a rendered picture of a scene is presented, in an exemplary context in which it may be deployed. Said apparatus 200 comprises a ML model MLM comprising an encoder ENC and a decoder DEC. It further comprises a memory M2 in which is stored a multiresolution set G of K striding grids {Gk}, with K an integer greater than 2 and k an integer comprised within 1 and K. Said multiresolution set G of grids stores features that will be learnt during training of the MLM as will be described therein and that are used by the encoder ENC to encode input multidimensional coordinates of points in a virtual space including the scene. According to one or more embodiments, the apparatus 200 is configured to access training data of a training dataset TDS that may be stored in an internal memory M2', that may be distinct or not from M2 or in a distant memory (not represented). In this latter case, the apparatus 200 comprises a communication means COM at least for accessing the distant training data set.

The decoder DEC comprises a neural network, for example, a Multi-Layer Perceptron MLP.

In one or more examples, the apparatus 200 comprises means for:

- obtaining input training data comprising at least one input picture captured by one or more cameras placed around a scene and multidimensional coordinates of a plurality of points in a virtual space including the scene, generated from a point of view of the camera having captured said at least one input picture,
- training TRN a ML model MLM, in a supervised manner, based on said input training data, said ML model comprising an encoder ENC and a decoder DEC.

Said encoder is trained to generate a vector of features, from features stored in the multiresolution set of K striding grids described above.

The decoder is trained to produce scene information values at said point as output from said vector of features being applied as input.

Said training comprises updating the features stored in said striding grids.

According to one or more embodiments, the multiresolution set of striding grids is defined as illustrated by FIG. 6A, already described.

According to one or more embodiments, the encoder ENC further uses a multiresolution set of weighting grids P, associated with the multiresolution set of striding grids G and comprising weights. The multiresolution set of weighting grids P has as many weighting grids as the set G has striding grids. In other words, each resolution level is associated with a weighting grid. The weighting grid of a resolution level k has as many weights as the resolution level k has subspaces of the virtual space. Each weighting grid at resolution level k is made of learnable weights. Each weight is associated with one of the Sk subspaces of the virtual space at resolution level k. Each weight of the weighting grid corresponding to the cell of the obtained at least one features, is multiplied to the at least features before the concatenating. The weights of the weighting grids are learnt during training of the MLM.

Once trained, the ML model MLM and the multiresolution set of striding grids are charged into a memory of apparatus 100 or of the electronic device ED described above in relation with FIG. 4.

According to one or more embodiments, the apparatus 200 of FIG. 8 further comprises second training means TRN2 for training a Generative Adversarial Network, GAN, to transform the multiresolution set G of striding grids associated with the learnt features into a second multiresolution set H of second striding grids initialized by said multiresolution set of striding grids. The GAN comprises a generator and a discriminator, as illustrated by FIGs 9A and 9B. The training means TRN2 is configured to alternatively train said generator to generate rendered pictures or video and said discriminator to discriminate between said rendered pictures and input pictures captured by said at least one camera, wherein the striding grids of the second multiresolution set H are associated with second features that are updated while the discriminator is able to discriminate between rendered pictures generated by said generator and input pictures captured by said at least one camera. The second training means thus performs a second training phase of a second decoder MLP2 of the ML model MLM.

According to one or more embodiments, the second training means further comprises transforming the associated multiresolution set P of weighting grids into a second multiresolution set Q of weighting grids.

At the end of the second training phase, the second multiresolution set of grids H replaces the multiresolution set G of striding grids obtained at the end of the first training phase and the second MLP replaces the first MLP previously described.

According to one or more embodiments, the apparatus 200 is integrated into an electronic device, for example a laptop, a smartphone, a tablet, etc. For example, it is integrated into the electronic device ED.

As an alternative, the apparatus 200 may not be embedded in the electronic device ED but connected to it through communication links. For example, the apparatus 200 may be implemented by one or more virtual machines in a cloud environment.

In one or more examples, the apparatus 200 is configured to implement a method for training a ML model to generate a rendered picture or video of a scene, that will be described hereinafter in relation with FIG. 9A and 9B.

FIG. 9A shows a flowchart of a method for training a machine learning model to predict content information values representative of points of a virtual space representative of a scene according to one or more exemplary embodiments. For example, this method is implemented by the apparatus 200 of FIG. 8. While the steps of the method are described in a sequential manner, the man skilled in the art will appreciate that some steps may be omitted, combined, performed in different order and / or in parallel.

In the following, we will generally refer to the example of a 3-D static scene S included in a virtual space VS as illustrated by FIG. 2 and to an application of novel view synthesis. However, as the method is not limited to this case, exemplary adaptations to 2-D or 3-D+t scenes will also be described when needed. In the following, we will refer to a ML model MLM comprising an encoder ENC and a decoder DEC, as previously described in relation with FIGs 4 and 8. The decoder DEC comprises at least one neural network, for example a MLP, as commonly used in previous works related to NERFs.

A goal of this training method is to simultaneously learn the features {fk} stored in association with the multiresolution set G of striding grids {Gk} of the encoder ENC, that were previously described in relation with FIGs 6A-6C, and internal parameters of the neural network MLP of the decoder DEC.

According to one or more exemplary embodiments, weights {wkj} of a multiresolution set P of weighting grids {Wkj}, as described in relation with FIG. 7D are learnt along with the features {fk} and the internal parameters of the neural network of the decoder DEC.

As for NERFs, this training is specific to a given scene S and the trained ML model MLM is only suited to predict scene characteristics of this particular scene S.

Back to FIG. 9A, input training data ITD are obtained in a step 90 from a training dataset TDS. The training dataset TDS comprises the at least one input picture captured by the at least one camera placed around the scene S. For a 2-D scene, only one camera and only one input picture is required, whereas, for a 3-D scene, one or more cameras are required to capture a plurality of pictures or views of the scene. This may be achieved by moving a single camera to different points of views of the scene and successively capturing the plurality of pictures from these different points of views, or by a placing plurality of cameras having different points of view of the scene and simultaneously capturing the plurality of pictures, as shown in FIG. 1, already described.

According to one or more exemplary embodiments, at least part of the training is performed in a supervised manner and the input pictures constitute the ground truth or labels that will be used to evaluate an output produced by the ML model MLM. The training data set TDS further comprises multidimensional coordinates of a plurality of input points of the virtual space VS that are obtained for each of the input pictures IP.

For example, with a 3-D scene and for a given input picture captured by a given camera, the multidimensional coordinates are positions XYZ of the points in the virtual space VS of FIG. 2. More precisely a plurality of rays is traced from the camera through the virtual space VS and the plurality of points is chosen along these rays.

With a 2-D scene, the plurality of input samples or points corresponds to the pixels of the single input picture.

In a step 91, the ML model MLM is trained with the input data stored in the training dataset TDS. At the end of this first training phase, the encoder ENC stores a multiresolution set of striding grids {Gk}, comprising learnt features {fk}$_1$. Optionally, it further stores a multiresolution set of weighting grids {Wkj} comprising learnt weights {wkj}. An exemplary embodiment of step 91 will be detailed below in relation with FIG. 9B.

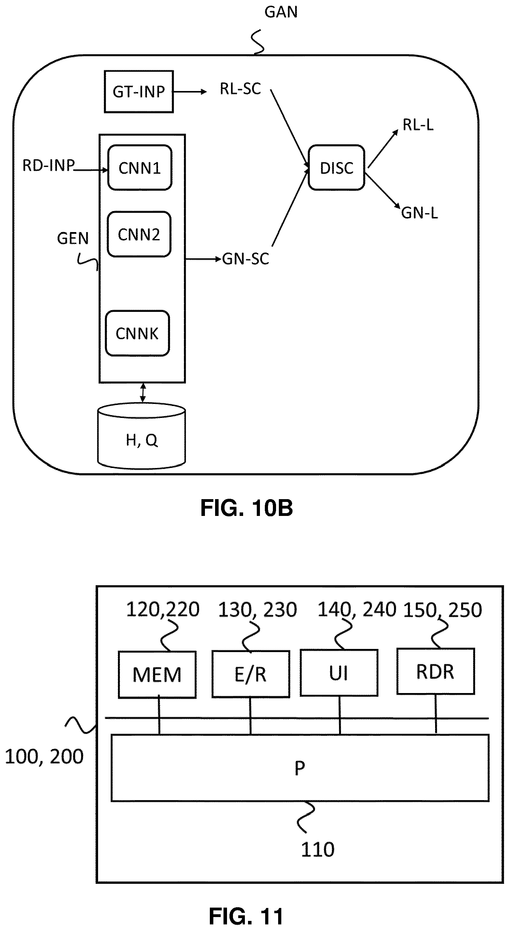

Optionally, according to one or more exemplary embodiments, an additional step 92 performs a second training phase of the MLM based on an additional neural network of GAN type. This second training phase aims at providing a second multiresolution set H of striding grids and correlated weighting grids Q learnt from the first sets obtained at step 81, which better encode the scene by completing holes, repairing badly learnt regions or increasing resolution of the scene. Step 92 will be described further in more details in relation with FIGs 10A and 10B.

In relation with FIG. 9B, an example embodiment of training step 91 is detailed. In a sub-step 910, multidimensional coordinates of a plurality of input points of the virtual space VS are obtained from the training dataset DTS. In a step 911, they are applied to the encoder ENC which outputs a vector of features Vf for each input point. In a sub-step 912, scene characteristics SC are output by the decoder DEC in response to the vector of features Vf applied as input. In a sub-step 913, based on the scene characteristics obtained for the plurality of input points, at least one rendered picture is generated. In a sub-step 914 a loss is determined using a loss function, based on the rendered picture and the ground truth input picture associated with the plurality of input points. For example, a mean squared error function may be used.

In a sub-step 915, it is checked whether a stopping criterion is satisfied. For example, the determined loss is compared with a given threshold and the stopping criterion is reached when the loss is less than the given threshold. If the stopping criterion is reached, the training process stops.

Conversely, the loss is backpropagated in 916 to the encoder where gradient descent is applied to update the features fk stored in memory in association with the striding grids {Gk}, and to the decoder where gradient descent is applied to update its internal parameters accordingly. According to one or more exemplary embodiments, the set of weighting grids P = {W1, W2, ...WK} is updated at the same time.

Then, a new iteration of the training process is triggered based on new input training data.

For example, with a 2-D scene, we consider an input 2-D image of resolution (Xres, Yres) captured by a camera, to be encoded with striding grids.

A multiresolution set of striding grids G = {G1, G2, ...Gk} is built so that its effective resolution is approximately equal to the image resolution.

As in the 3D case, at each resolution level k, the image is subdivided into subspaces. The obtained coordinates MC for each point or pixel of the input image are transformed into coordinates MC' that are relative to the subspace of the virtual space to which the input point belongs.

- Therefore, at resolution level k, the grid level Gk has a resolution (Rkx, Rky) and the virtual space is subdivided into Nkx * Nkx subspaces, we have:

$$x'_k = \frac{x}{X_{res}} \, mod\left(\frac{1}{N_{kx}}\right) * R_{xk}$$

$$y'_k = \frac{y}{Y_{res}} \, mod\left(\frac{1}{N_{ky}}\right) * R_{yk}$$

As described above, (xk',yk') are discretized to calculate the coordinates of the 4 neighboring vertices which are used to fetch their stored features and perform a linear interpolation, to get the feature corresponding to pixel (xk',yk').

The same operation is repeated for each of the K grids. Then, the obtained features are concatenated into a vector. Optionally, weighting grids are applied as described above.

The resulting vector of features is passed to a decoder, which directly predicts 3 RGB values corresponding to the ground truth pixel (x,y).

A loss function, for example an MSE, is calculated between the prediction and the ground truth RGB values of each pixel. This loss is then backpropagated to update feature values stored in striding grids and MLP internal parameters.

Once training is complete, a set of striding grids + MLP is obtained, encoding the 2-D image. The striding grid set with MLP can be used at any time to reproduce the ground-truth image.

An advantage is compression. Considering now a Full High Definition, FHD, image with a resolution of 1920x1080 pixels, which roughly amounts to 2 million pixels, or 6.22 Mbytes, it may be encoded into a multiresolution set of 11 striding grids of resolution (81*81) comprising each 2 features stored at its vertices, which represents: 81*81*11*2 = 144342 features stored in float16 (of size 2 bytes), that is approximately 144342*2/1024, roughly equal to 282 Kbytes.

The decoder comprises arrays whose size is negligible compared to the one of the set of grids. For example, an MLP made up of 3 layers at most, represented by matrices of size 22*64, 64*64, 64*3 and bias vectors of size 64, 64, 3 count 5827 parameters, stored in float16 represents around 11.7 Ko.

For example, with a 3-D scene and for a given input picture captured by a given camera, the multidimensional coordinates are positions XYZ of the points in the virtual space VS of FIG. 2. More precisely a plurality of rays is traced from the camera through the virtual space VS and the plurality of points is chosen along these rays. A rendered picture is generated based on the scene characteristics produced by the MLP and a loss is determined. The sub steps 910-916 are repeated with another input picture, until convergence between the rendered picture and the ground truth picture (stopping criterion reached).

Back to the example of a dynamic 3-D scene described in relation with FIGs 7A and 7B, the training method applies in the same way. In this case, the training dataset TDS comprises the plurality of sequences of input pictures captured by the at least one camera placed around the scene S, corresponding camera poses (position of the camera in space for capturing the image and its orientation, as well as the time of capture).

In this embodiment, the model to be encoded is a point cloud $\Omega_t$(t=0), which may be for example initialized at an initial time instant t= 0 in a uniform random fashion. Each point in the point cloud is represented by a 3D Gaussian that is characterized by a position, a size (scale), an orientation (a 3x3 rotation matrix), an opacity and a color function parametrized with 48 features as exposed above. The above-described multiresolution set of 4-D (or 3-D+t) grids (encoder) and the associated MLP (decoder) are trained to get "deformation fields" that represent the point cloud at different times t. This training involves updating these characteristics for all points, up to convergence.

To this end, at each training iteration, we consider each point (x,y,z) in the initial point cloud and a non-null instant at which we want to predict views. This gives us 3-D+t coordinates (x,y,z,t) of a point (or equivalently a Gaussian at time t) that are applied to the multiresolution set of 4-D striding grids to build a vector of features, which is then fed to the decoder that predicts new features for the Gaussian concerned: a variation of position corresponding to this Gaussian at time t (it may have moved or not in the time interval [0,t]). In addition, variations of other characteristics are predicted, such as the Gaussian's size and orientation.

For example, let p be the initial point cloud positions, r the initial Gaussian's orientations, s the initial Gaussian sizes.

The model MLM is used to predict variations dp, dr, ds such that the new point cloud has new positions $p_{new} = p + dp$, $r_{new} = r + dr$, $s_{new} = s + ds$.

The color parameters and the opacity are the same as the initial point cloud gaussians.

$\Omega_t$ (t=0). A rendered view is generated by projecting the points of point cloud $\Omega_t$ at time t onto the image plane of the input camera using the Gaussian splatting technique. All the points are projected into the camera's image plane. Points outside the camera field are naturally ignored after projection. A loss function corresponding to the pose of the input camera at the given subsequent time step t#0, for example an MSE, is calculated between the prediction and the ground truth RGB values of each pixel, and then backpropagated to update the feature values in the striding grids, the initial point cloud characteristics like position, color parameters, opacity, rotation, sizes, and MLP internal parameters.

Once trained, the ML model MLM comprising the encoder ENC, the decoder DEC, the set of striding grids G, and possibly the set of weighting grids P is stored in memory. It may be further charged into an electronic device configured to perform rendering operations on the scene. According to one or more examples, such an electronic device comprises an apparatus 100 as previously described or is provided to implement the method described therein in relation with FIGs 5A and 5B.

In the following, a second training phase is described according to one or more embodiments that are aimed at solving a remaining problem. As a non-limiting illustrative example, a 3-D scene is considered, as illustrated in FIG. 2. However, this second training phase may also apply in any of the cases (2-D, 3-D +t) described above.

Training of the ML model MLM relies on the set of input images captured from different camera points of view. However, most of the times, these input images fail to cover an entire region of interest to be reconstructed, that is some points of the virtual space VS have not been learnt correctly and the representation provided by the MLM comprises holes.

A consequence is that novel view synthesis of a region not seen during the training results in bad quality images.

For a 2-D scene, an issue could be that the maximal resolution of the learnt scene is not appropriate for an application of a posteriori zooming into the scene.

For 3-D +t or dynamic scenes, not only some areas of the scene may not have been covered by the cameras and therefore could result in a poor reconstruction, but also, especially when only one camera is used and moved around the scene, each part of the dynamic scene is only captured at a given moment, from a single point of view. We therefore lack information about the other parts of the scene at that precise time. Therefore, predictions of novel views of the movement of these uncovered parts at the precise instant t, would be of poor quality.

In order to alleviate these issues, a solution is to provide completion of the poorly reconstructed region of the virtual space VS. This may be achieved by re-training the ML model, as will be described now in relation with FIGs 9A-9B and 10A-10B.

In relation with FIGs. 10A and 10B, we consider a second ML model based on a Deep Learning architecture, for instance a GAN based architecture.

In a known manner, a GAN architecture comprises two concurrent neural networks: one or multiple generator(s) GEN and a discriminator DISC. The generator GEN takes a given input and transforms it into a desired output. The discriminator DISC is a helper neural network, that takes as input the output of the generator and is trained to predict whether this output is "fake" (or generated) data or "real" (or ground truth pictures or video) data.

The generator and discriminator are trained alternately. For example, in some iterations, the generator GEN is not trained (its internal parameters are not updated), but only the discriminator, and conversely, in other iterations, only the generator GEN is trained. During these iterations, the discriminator is trained with training data comprising both output data generated by the generator GEN and labeled "generated" and ground truth data labeled "real".

Therefore, as the learning phase progresses, the discriminator learns to distinguish generated data from real data. In turn, the generator is trained to generate more realistic output data. A stopping criterion is reached when the generator is able to fool the discriminator DISC.

In FIG. 9, the generator GEN uses the multiresolution set G of striding grids {Gk} obtained at the end of training step 91, whose cells are associated with learnt features {fk} that are stored in a memory, as previously described. According to one or more embodiments, it further uses the multiresolution set of weighting grids {Wkj} comprising learnt weights that are also stored.

The task of the GAN model is to start from this first set G of striding grids and to transform or "translate" it into a second multiresolution set H of striding grids, comprising updated learnt features {fk'}, that better encode the scene by completing the holes, repairing badly learnt areas or increasing the resolution of the scene.

According to one or more embodiments, illustrated by FIG. 10B, the generator GEN comprises a set of small 3D convolutional networks, CNNs, C = (CNN1, CNN2,..., CNNK), one CNN for each striding grid of the set G. Back to FIG. 8B, the small CNNs are trained to transform each striding grid of the set G into a second set of striding grids H and a second MLP MLP2, different from the first one previously trained to decode the vector of features generated from the set G of striding grids, is simultaneously trained to decode the vectors of features generated from the set H of striding grids. In one or more embodiments, this second MLP2 is initialized with the features of the first MLP.

As the striding grids and associated features are of significantly smaller size than the virtual space encompassing the scene (for example $81^3$ VS $2048^3$), they are very well suited to CNNs, whose runtime grows as $O(k^3)$ for volumes or $O(k^2)$ for images which is significantly lower than CNN run on the entire scene. For high resolution scenes (e.g. 2048*2048 input pictures), a CNN network can be very expensive.

The discriminator DISC takes as input, separately, the images of the generator GEN that it labels as "fake" data and also real images coming from the NERF training set images that it labels as "real" data. The discriminator comprises one or more 2D Convolutional Neural networks that are trained to output a probability between 0 and 1: above 0.5, the data can be considered as real, and below 0.5 it is considered as generated.

An advantage is that a GAN architecture is used to transform a first version of the multiresolution set of striding grids into an enhanced version which is more efficient, especially in regions of the subspace which are not or not enough cover

ed by input pictures or video of the other a posteriori tasks than scene completion, such as transformation of the learnt NERF into a more stylized version with special effects.

It should be noted that the way the GAN is used therein is disruptive as it is not applied to train the whole ML model MLM, as in the prior art. In the proposed method, the GAN is used in a second training phase, focused on the encoder ENC to achieve an a posteriori transformation of the multiresolution set of striding grids and to decoder (MLP2) to learn to decode the transformed set H of striding grids.

In this regard, the approach described therein is possible thanks to the regular structure of the striding grids and their invariance with respect to translation, as CNNs involved in the generator GEN are known to exploit preservation of information in a given neighborhood. On the contrary, they are thus not suited to the "instant NGP" tables due to the use of hash tables.

FIG. 11 illustrates an example of the hardware structure of an apparatus 100 and/or of an apparatus 200 as described therein. In this example, the apparatus 100, 200 is configured to implement all the steps of the aforementioned methods as described herein. Alternatively, it could also implement only some of these steps.

Related to FIG. 11, the apparatus 100, 200 comprises at least one processor 110, 210 and at least one memory 120, 220. The apparatus 100, 200 may also comprise one or more communication interfaces. In this example, the apparatus 100, 200 comprises network interfaces 130, 230 (e.g., network interfaces for wired/-wireless network access, including Ethernet interface, WIFI interface, etc.) connected to the processor 110, 210 and configured to communicate via one or more wired/unwired communication links and user interfaces 140, 240 (e.g., keyboard, mouse, display screen, etc.) connected to the processor. Apparatus 100, 200 may also include one or more RDR media drives 150 for reading a computer-readable storage medium (e.g. a digital storage disc (CD-ROM, DVD, Blue Ray, etc.), a USB stick, etc.). Processor 110, 210 is connected to each of the other aforementioned components in order to control their operation.

Memory 120, 220 may comprise random access memory (RAM), cache memory, non-volatile memory, backup memory (e.g., programmable or flash memories), read-only memory (ROM), hard disk drive (HDD), solid-state drive (SSD) or any combination thereof. The ROM of memory 120, 220 can be configured to store, among other things, an operating system of device 100 and/or one or more computer program codes of one or more software applications. The RAM of memory 120 can be used by processor 110, 220 for temporary data storage.

The processor 110, 210 can be configured to store, read, load, execute and/or otherwise process instructions stored in a computer-readable information storage medium and/or in memory 120, 220 so that, when the instructions are executed by the processor, the device 100 executes one or more or all of the steps of the method described herein. Means implementing a function or set of functions may correspond in this document to a software component, a hardware component or a combination of hardware and/or software components, capable of implementing the function or set of functions, as described below for the means concerned.

An embodiment relates to an information carrier readable by a data processor, comprising instructions of a program as mentioned above. The information carrier may be any hardware means, entity or apparatus, capable of storing instructions of a program as mentioned above. Usable program storage media include ROM or RAM memory, magnetic storage media such as magnetic disks and magnetic tapes, hard disks or optically readable digital data storage media, or any combination thereof.

In some cases, the computer-readable storage medium is non-transitory. In other cases, the information carrier may be a transient medium (e.g., a carrier wave) for transmitting a signal (electromagnetic, electrical, radio or optical signal) carrying program instructions. This signal can be routed via a suitable wired or wireless transmission medium: electric or optical cable, radio or infrared link, or by other means.

An embodiment also relates to a computer program product comprising a computer-readable storage medium on which program instructions are stored, the program instructions being configured to cause the apparatus 100, 200 to implement some or all of the steps of one or more of the methods described herein when the program instructions are executed by one or more processors and/or one or more programmable hardware components of the apparatus 100, 200.

According to one or more embodiments, apparatus 200 is itself integrated into a host device, for example the system S for processing examination images of a patient as described herein. This system, too, may be implemented by one or more physically separate machines and have the overall architecture of a computer and the hardware structure of a computer as previously described for apparatus 200 in connection with FIG. 11. In one or more examples, apparatus 100 is not integrated into system S, but into a distant server. Once trained, the machine learning model MML is charged into apparatus 200 of system S, that may be installed in a clinical environment. In an alternative, apparatus 100 is integrated into system S, that is training, or at least re-retraining of the machine learning model MLM may be performed in situ.

The above-mentioned embodiments and their variants each have numerous advantages. They make it possible to harness the power of machine learning in a method and apparatus for predicting content information values of scene, using a machine learning model, that has been trained with input pictures or video captured by one or more camera placed around the scene. The trained machine learning model described therein comprises an encoder that is capable of encoding information input multidimensional coordinates of a plurality of points in a virtual space including the scene into a vector of learnt features stored in memory and associated with a multiresolution set of striding grids that are mapped to the virtual space and a decoder that is capable of producing scene characteristics at the points from the vector of learnt features applied as input.

The methods, apparatus and system presented therein find many applications. The proposed ML model provides an efficient solution for storing a compressed representation of a scene and accessing to scene characteristics corresponding to a particular region of interest or the whole scene in view of performing a broad range of processing operations relative to the scene. In particular, the proposed ML model is well suited for rendering applications, such as zooming into a 2-D high-resolution 2-D picture, synthetizing novel views of a 3-D static or dynamic scene, adding special effects etc.

**Claims**

1. A computer-implemented method comprising:

    - obtaining (51) multidimensional coordinates (MC) of a plurality of points of a scene (S) included in a virtual space (VS),
- processing (52) said plurality of points by a trained machine learning model (MLM), comprising a neural network (DEC), said processing comprising, for the multidimensional coordinates of one point of said plurality of points:

    - obtaining (521) a vector of features, comprising features (fk) learnt during training and stored in association with a set (G) of K striding grids, with K being an integer greater than or equal to 2,
    - a given striding grid ($G_k$) of said set being associated with a given resolution level k, with k integer within 1 and K, said given resolution level k subdividing the virtual space (VS) into a number Sk of subspaces, the given striding grid (Gk) being applied to further subdivide the subspace of said Sk subspaces mapping said multidimensional coordinates, the given striding grid comprising Mk cells, with Mk an integer greater than 1, a total number of cells of the K striding grids being smaller than a maximum over the K resolution levels of a product of the number Mk of cells with the number Sk of subspaces, at least one of said learnt features (fk) of said vector being obtained from the cell of said striding grid (Gk) mapping said multidimensional coordinates within said subspace, and
    - applying (522) said vector of features as input to the neural network, to produce scene characteristics (SC) as output.

2. Method according to claim 1, wherein said method further comprises using (53) the scene characteristics (SC) in a rendering process relating to the scene.

3. Method according to any one of claims 1 and 2, wherein obtaining (521) of a vector of features comprises:

    - for at least one resolution level k, obtaining (5212) said at least one learnt feature from learnt features stored in vertices of said cell of the at least one striding grid,
    - concatenating (5214) the obtained features at said at least one resolution level k into said vector of features,

4. Method according to any one of the preceding claims, wherein, for at least one resolution level k of said K resolution levels, said obtaining of a vector of features further comprises applying a weight of a weighting grid (Wk) comprising Sk weights learnt during training to the obtained features, said weight being associated with said subspace.

**5.** Method according to any one of the preceding claims, wherein said scene being 3-Dimensional, said multidimensional coordinates are obtained for a plurality of points selected along a ray projected from said virtual camera into the virtual space, and said rendering process comprises synthetizing a new picture of the scene on an image plane from a point of view of a virtual camera, distinct from points of views of said one or more cameras placed around the scene, by aggregating the output scene characteristics, comprising color and opacity values, and computing pixel values of the new picture on said image plane of said virtual camera.

**6.** Method according to any one of claims 1 to 5, wherein said scene being 3-Dimensional, said multidimensional coordinates are obtained for a plurality of points of a point cloud providing a sparse representation of the scene, said rendering process comprises synthetizing a new picture of the scene on an image plane from a point of view of a virtual camera, distinct from points of views of said one or more cameras placed around the scene, by projecting the output scene characteristics onto said image plane, said output scene characteristics comprising color, opacity and 3D gaussian scale and orientation values, and computing pixel values of the new picture from said output scene characteristics.

**7.** Method according to any one of claims 1 to 5, wherein said scene being 4-Dimensional (XYZT), said multidimensional coordinates are obtained from a plurality of points of a point cloud representing the scene at a given instant (t0) and from a target instant (t), different from said given instant, said rendering process comprises synthetizing a new picture of the scene at said target instant (t) on an image plane from a point of view of a virtual camera, distinct from points of views of said one or more cameras placed around the scene, by projecting the output scene characteristics, comprising color, opacity and 3D gaussian scale and orientation values at said target instant, onto said image plane of said virtual camera, and computing pixel values of the new picture.

**8.** A computer-implemented method comprising:

- obtaining (90) at least one input picture captured by one or more cameras placed around a scene (S),
- obtaining (90) multidimensional coordinates of a plurality of points in a virtual space (VS) including the scene, from said at least one input picture,
- training (91) a machine learning model, based on said at least one input picture, said machine learning model comprising a neural network, said training comprising:

- for said plurality of points, obtaining a vector of features, comprising features (fk) learnt during training and stored in association in a set of K striding grids, with K being an integer greater than or equal to 2,
- obtaining (521) a vector of features, comprising features (fk) learnt during training and stored in association with a set of K striding grids, with K being an integer greater than or equal to 2,
- a given striding grid (Gk) of said set being associated with a given resolution level k, with k integer within 1 and K, said given resolution level k subdividing the virtual space (VS) into a number Sk of subspaces, the given striding grid (Gk) being applied to further subdivide the subspace of said Sk subspaces mapping said multidimensional coordinates, the given striding grid comprising Mk cells, with Mk an integer greater than 1, a total number of cells of the K striding grids being smaller than a maximum over the K resolution levels of a product of the number Mk of cells with the number Sk of subspaces, at least one of said learnt features (fk) of said vector being obtained from the cell of said striding grid (Gk) mapping said multidimensional coordinates within said subspace,

- applying said vector of features as input to the neural network, to produce scene characteristics (SC) as output, and
- using the scene characteristics in a rendering process relating to the scene, comprising generating (913) a rendered picture of the scene based on said output scene information values,
- determining (914) whether a stopping criterion has been reached, based on a loss between said generated rendered picture and said input picture captured by said camera,
- while the stopping criterion has not been reached and before executing said new iteration, backpropagating (916) the loss, said features stored in said set of multiresolution grids of said encoder, being updated along with internal parameters of the neural network of said decoder, based on said loss.

**9.** Method according to claim 8, wherein said method further comprises training a Generative Adversarial Network (GAN) to transform the multiresolution set (G) of striding grids associated with the learnt features into a second multiresolution set of second striding grids initialized by said multiresolution set of striding grids, said training comprising alternatively training said generator to generate rendered pictures or video and said discriminator to discriminate between said rendered pictures and input pictures captured by said at least one camera, wherein the striding grids of the second multiresolution set H are associated with second features that are updated while the discriminator is able to discriminate between rendered pictures generated by said generator and input

10. An apparatus (100) comprising means for:

- obtaining multidimensional coordinates of a plurality of points of a scene included in a virtual space (VS),
- processing said plurality of points by a trained machine learning model, comprising a neural network (DEC), said processing comprising, for the multidimensional coordinates of one point of said plurality of points:

- obtaining a vector of features, comprising features (fk) learnt during training and stored in association with a cell of at least one striding grid of a set of K striding grids, with K being an integer greater than or equal to 2, a given striding grid (Gk) of said set being associated with a given resolution level k, with k integer within 1 and K, said given resolution level k subdividing the virtual space (VS) into a number Sk of subspaces, the given striding grid (Gk) being applied to further subdivide the subspace of said Sk subspaces mapping said multidimensional coordinates, the given striding grid comprising Mk cells, with Mk an integer greater than 1, a total number of cells of the K striding grids being smaller than a maximum over the K resolution levels of a product of the number Mk of cells with the number Sk of subspaces, at least one of said learnt features (fk) of said vector being obtained from the cell of said striding grid (Gk) mapping said multidimensional coordinates within said subspace,
- applying said vector of features as input to the neural network, to produce scene characteristics (SC) as output.

11. An apparatus (100) according to the preceding claim, wherein the means comprise

- at least one processor,
- at least one memory storing instructions that, when executed by the at least one processor, cause the apparatus to perform the method according to any one of claims 1 to 7, said trained machine learning model (MLM) and said multiresolution set of striding grids.

12. An apparatus (200) comprising means for:

- obtaining at least one input picture captured by one or more cameras placed around a scene (S),
- obtaining multidimensional coordinates of a plurality of points in a virtual space (VS) including the scene, from said at least one input picture,
- training a machine learning model, based on said at least one input picture, said machine learning model comprising a neural network, said training comprising:
for the multidimensional coordinates of one point of said plurality of points:

- obtaining a vector of features, comprising features (fk) learnt during training and stored in association with a set of K striding grids, with K being an integer greater than or equal to 2, a given striding grid (Gk) of said set being associated with a given resolution level k, with k integer within 1 and K, said given resolution level k subdividing the virtual space (VS) into a number Sk of subspaces, the given striding grid (Gk) being applied to further subdivide the subspace of said Sk subspaces mapping said multidimensional coordinates, the given striding grid comprising Mk cells, with Mk an integer greater than 1, a total number of cells of the K striding grids being smaller than a maximum over the K resolution levels of a product of the number Mk of cells with the number Sk of subspaces, at least one of said learnt features (fk) of said vector being obtained from the cell of said striding grid (Gk) mapping said multidimensional coordinates within said subspace,
- applying said vector of features as input to the neural network, to produce scene characteristics as output, and
- using the scene characteristics in a rendering process relating to the scene, comprising generating a rendered picture of the scene based on said output scene information values,
- determining whether a stopping criterion has been reached, based on a loss between said generated rendered picture and said input picture captured by said camera, and
- while the stopping criterion has not been reached and before executing said new iteration, backpropagating the loss, said features stored in said set of multiresolution grids of said encoder, being updated along with internal parameters of the neural network of said decoder, based on said loss.

**13.** An apparatus (200) according to the preceding claim, wherein the means comprise:

- at least one processor,
- at least one memory storing instructions that, when executed by the at least one processor, cause the apparatus to perform the method according to any one of claims 8 to 9, said machine learning model (MLM) and said multi-resolution set of striding grids.

**14.** An electronic device comprising:

- an apparatus (100, 200) according to any one of claims 10-13.

**15.** A computer program comprising instructions for causing a computer to perform a method according to any one of claims 1-9.

**FIG.1**

**FIG. 2**

**FIG. 3**

EP 4 576 001 A1

**FIG. 4**

OBT. INP ⟋ 50

OBT. MC ⟋ 51

OBT. Vf ⟋ 521

OBT. SC ⟋ 522

⟋ 52

GEN. RR ⟋ 53

## FIG. 5A

MC

TRNS. MC' ⟋ 5210

MAP. Gk ⟋ 5211

k=k+1

0<k<K

OBT. f$_k$ ⟋ 5212

OBT. W$_k$ ⟋ 5213

⟋ 521

CNC. Vf ⟋ 5214

## FIG. 5B

**FIG. 6A**

**FIG. 6B**

**FIG. 6C**

## FIG. 6D

## FIG. 7

FIG. 8

FIG. 9A

91

OBT. MC ～ 910

OBT. Vf ～ 911

OBT. SC ～ 912

GEN. RR ～ 913

DET. LOSS ～ 914

915

STOP? — y →

n

UPD. H,Q, CNN, MLP2 ～ 916

**FIG. 9B**

GAN

GT-INP → RL-SC

RD-INP → GEN → GN-SC

DISC → DISC-L

→ GEN-L

**FIG. 10A**

GAN

GT-INP → RL-SC

RD-INP → CNN1

GEN

CNN2 → GN-SC

CNNK

H, Q

DISC

RL-L

GN-L

**FIG. 10B**

120, 220   130, 230   140, 240   150, 250

MEM   E/R   UI   RDR

100, 200

P

110

**FIG. 11**

Europäisches
Patentamt

European
Patent Office

Office européen
des brevets

# EUROPEAN SEARCH REPORT

**Application Number**

EP 23 30 7316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DONGTING HU ET AL: "Multiscale Representation for Real-Time Anti-Aliasing Neural Rendering", ARXIV.ORG, CORNELL UNIVERSITY LIBRARY, 201 OLIN LIBRARY CORNELL UNIVERSITY ITHACA, NY 14853, 18 September 2023 (2023-09-18), XP091615070, * abstract * * section 3 * | 1-15 | INV. G06T15/20 G06T17/00 |
| A | MÜLLER THOMAS ET AL: "Instant neural graphics primitives with a multiresolution hash encoding", ACM TRANSACTIONS ON GRAPHICS, ACM, NY, US, vol. 41, no. 4, 22 July 2022 (2022-07-22), pages 1-15, XP059192245, ISSN: 0730-0301, DOI: 10.1145/3528223.3530127 * abstract * * sections 3 and 4 * | 1-15 | |
| A,D | JONATHON LUITEN ET AL: "Dynamic 3D Gaussians: Tracking by Persistent Dynamic View Synthesis", ARXIV.ORG, CORNELL UNIVERSITY LIBRARY, 201 OLIN LIBRARY CORNELL UNIVERSITY ITHACA, NY 14853, 18 August 2023 (2023-08-18), XP091596306, * abstract * * section 3 * | 6,7 | **TECHNICAL FIELDS SEARCHED (IPC)** G06T |

-/--

The present search report has been drawn up for all claims

| Place of search | Date of completion of the search | Examiner |
|---|---|---|
| Berlin | 27 May 2024 | Bouchaâla, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 30 7316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Yilin Gao: "NeRF: Neural Radiance Field in 3D Vision, Introduction and Review", ARXIV.ORG, 30 November 2023 (2023-11-30), pages 1-26, XP093166635, Retrieved from the Internet: URL:https://arxiv.org/pdf/2210.00379v5 * the whole document * ----- | 1-15 | |

TECHNICAL FIELDS
SEARCHED          (IPC)

The present search report has been drawn up for all claims

| Place of search | Date of completion of the search | Examiner |
|---|---|---|
| Berlin | 27 May 2024 | Bouchaâla, Nicolas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20230052645 A1

### Non-patent literature cited in the description

- **KERBL et al.** 3D Gaussian Splatting for Real-Time Radiance Field Rendering. *ACM Trans. Graph.*, August 2023, vol. 42 (4)
- **LUITEN et al.** Rendering Dynamic 3D Gaussians: Tracking by Persistent Dynamic View Synthesis. *ACM Trans. Graph.*, August 2023, vol. 42 (4)
- **WU et al.** 4D Gaussian Splatting for Real-Time Dynamic Scene Rendering. *ArXiv*, October 2023, https://doi.org/10.48550/arXiv.2310.08528